(19) Europäisches Patentamt
European Patent Office
Office européen des brevets

(11) **EP 4 277 108 A1**

(12) **EUROPEAN PATENT APPLICATION**
published in accordance with Art. 153(4) EPC

(43) Date of publication:
**15.11.2023 Bulletin 2023/46**

(21) Application number: **21917437.2**

(22) Date of filing: **06.01.2021**

(51) International Patent Classification (IPC):
***H02M 7/48*** *(2007.01)*

(52) Cooperative Patent Classification (CPC):
**H02M 7/48**

(86) International application number:
**PCT/JP2021/000195**

(87) International publication number:
**WO 2022/149209 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku
Tokyo 100-8310 (JP)**

(72) Inventors:
• **MATSUO, Haruka**
**Tokyo 100-8310 (JP)**
• **TAKAHARA, Takaaki**
**Tokyo 100-8310 (JP)**
• **ARISAWA, Koichi**
**Tokyo 100-8310 (JP)**
• **UEMURA, Keisuke**
**Tokyo 100-8310 (JP)**
• **HACHIYA, Yosuke**
**Tokyo 100-8310 (JP)**

(74) Representative: **Pfenning, Meinig & Partner mbB
Patent- und Rechtsanwälte
An der Frauenkirche 20
01067 Dresden (DE)**

(54) **POWER CONVERSION DEVICE, MOTOR DRIVING DEVICE, AND REFRIGERATION-CYCLE APPLICATION DEVICE**

(57)     A power converter (1) includes a converter (10) that rectifies an alternating-current voltage applied from an alternating-current power supply (100), a capacitor (12) connected to output ends of the converter (10), an inverter (14) connected both ends of the capacitor (12), and a controller (30) that controls an operation of the inverter (14). A voltage output from the converter (10) includes a ripple component due to a voltage fluctuation of the alternating-current voltage. When the controller (30) performs acceleration and deceleration control on the motor (110), the controller (30) changes a rotational speed command from a command value during the normal control, in a first period in which a rotational speed of the motor (110) is in a first speed range.

FIG.1

EP 4 277 108 A1

# Description

Field

The present disclosure relates to a power converter for converting alternating-current power into desired power, a motor driver, and a refrigeration cycle applied equipment.

Background

A power converter includes: a converter that converts an alternating-current voltage output from an alternating-current power supply into a direct-current voltage; a smoothing unit that smooths an output voltage of the converter; and an inverter that converts the direct-current voltage output via the smoothing unit into an alternating-current voltage and applies the alternating-current voltage to a load.

Patent Literature 1 below describes a power converter for compressor driving. In this type of power converter, when a direct-current voltage applied to an inverter vibrates or when a load torque is to be controlled, a vibration component is superimposed on a current flowing through the inverter. When the vibration component and a rotational speed of a motor match or are close to each other, they mutually affect each other, which causes generation of beat sound in the motor.

In view of the above problem, in Patent Literature 1, when a frequency that is an integral multiple of an operation frequency of the motor is in a range of a value close to twice a power supply frequency, generation of the beat sound is suppressed by varying the operation frequency of the motor at a rate equal to an increase and a decrease.

Citation List

Patent Literature

Patent Literature 1: Japanese Patent Application Laid-open No. 2007-104756

Summary

Technical Problem

However, in the technique of Patent Literature 1, it is necessary to minutely fluctuate the rotational speed of the motor in order to suppress the beat sound. Therefore, time required to accelerate the motor to a target rotational speed becomes long, and there is a problem that the motor cannot be smoothly accelerated. A similar problem arises when the motor is decelerated.

The present disclosure has been made in view of the above, and an object thereof is to obtain a power converter capable of smoothly accelerating and decelerating a motor while suppressing generation of beat sound.

Solution to Problem

In order to solve the above-described problem and achieve the object, a power converter according to the present disclosure includes a converter, a capacitor, an inverter, and a controller. The converter rectifies an alternating-current voltage applied from the alternating-current power supply. The capacitor is connected to output ends of the converter. The inverter is connected to both ends of the capacitor. The controller controls an operation of the inverter. A voltage output from the converter includes a ripple component due to a voltage fluctuation of the alternating-current voltage. When the controller performs acceleration and deceleration control on a motor, the controller changes a command value for a physical quantity associated with a change in the rotational speed from a command value for the physical quantity during a normal control, in a first period in which the rotational speed of the motor is in a first speed range.

Advantageous Effects of Invention

According to the power converter of the present disclosure, it is possible to smoothly accelerate and decelerate the motor while reducing generation of beat sound.

Brief Description of Drawings

FIG. 1 is a diagram illustrating a configuration of a power converter according to a first embodiment.
FIG. 2 is a block diagram illustrating a configuration example of a control calculator according to the first embodiment.
FIG. 3 is a graph illustrating a typical generation pattern of a rotational speed command.
FIG. 4 is a graph illustrating an example of a generation pattern of a rotational speed command in the first embodiment.
FIG. 5 is a view for explaining a cause of generation of beat sound that may be generated in a configuration of the first embodiment.
FIG. 6 is a graph illustrating another example of a generation pattern of the rotational speed command in the first embodiment.
FIG. 7 is a block diagram illustrating an example of a hardware configuration that implements functions of the control calculator according to the first embodiment.
FIG. 8 is a block diagram illustrating another example of a hardware configuration that implements functions of the control calculator according to the first embodiment.
FIG. 9 is a block diagram illustrating a configuration example of a control calculator according to a second embodiment.

FIG. 10 is a graph illustrating an example of a generation pattern of a rotational speed command and a voltage limiting coefficient in the second embodiment.

FIG. 11 is a graph illustrating another example of a generation pattern of the rotational speed command and the voltage limiting coefficient in the second embodiment.

FIG. 12 is a diagram illustrating a configuration example of a refrigeration cycle applied equipment according to a third embodiment.

Description of Embodiments

Hereinafter, a power converter, a motor driver, and a refrigeration cycle applied equipment according to embodiments of the present disclosure will be described in detail with reference to the accompanying drawings.

First Embodiment.

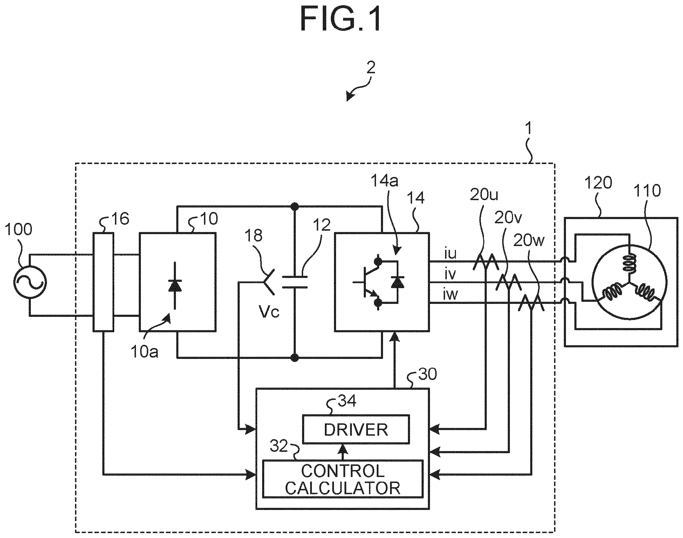

FIG. 1 is a diagram illustrating a configuration of a power converter 1 according to a first embodiment. The power converter 1 is connected to an alternating-current power supply 100 and a compressor 120. The compressor 120 is an example of a load. The compressor 120 includes a motor 110. The power converter 1 converts a first alternating-current voltage, which is a power supply voltage applied from the alternating-current power supply 100, into a second alternating-current voltage having a desired amplitude and phase, and applies the second alternating-current voltage to the motor 110.

The power converter 1 includes a voltage-current detector 16, a converter 10, a capacitor 12, a voltage detector 18, an inverter 14, current detectors 20u, 20v, and 20w, and a controller 30. The power converter 1 and the motor 110 included in the compressor 120 constitute a motor driver 2.

The voltage-current detector 16 detects a first alternating-current voltage applied from the alternating-current power supply 100 to the converter 10, and detects an alternating current flowing in and out of the converter 10. Each detected value obtained by the voltage-current detector 16 is input to the controller 30.

The converter 10 rectifies the first alternating-current voltage applied from the alternating-current power supply 100. The converter 10 is configured by using a plurality of bridge-connected rectifying elements 10a. Note that arrangement and connection of the rectifying elements 10a in the converter 10 are known, and a description thereof will be omitted here.

Further, the converter 10 may have a boosting function of boosting a rectified voltage, together with the rectifying function. A converter having the boosting function can be configured by including, in addition to the rectifying element 10a or instead of the rectifying element 10a, one or more switching elements or a plurality of switching elements in which a transistor element and a diode are connected in anti-parallel. Note that arrangement and connection of the switching elements in the converter having the boosting function are known, and a description thereof is omitted here.

A rectified voltage rectified by the converter 10 is applied to the capacitor 12.

The capacitor 12 is connected to the output ends of the converter 10. The capacitor 12 holds the rectified voltage output from the converter 10. Examples of the capacitor 12 include an electric field capacitor and a film capacitor.

The voltage detector 18 detects a capacitor voltage Vc, which is a voltage of the capacitor 12. A detected value of the voltage detector 18 is input to the controller 30.

The inverter 14 is connected to both ends of the capacitor 12. The inverter 14 converts a voltage output from the capacitor 12 into a second alternating-current voltage having a desired amplitude and phase, and applies the second alternating-current voltage to the motor 110 of the compressor 120. The inverter 14 includes a plurality of switching elements 14a in which a transistor element and a diode are connected in anti-parallel. Note that arrangement and connection of the switching elements 14a in the inverter 14 are known, and a description thereof will be omitted here.

Electric wiring connecting the inverter 14 and the motor 110 is provided with the current detectors 20u, 20v, and 20w. The current detectors 20u, 20v, and 20w each detect a current for each one phase among three-phase currents iu, iv, and iw output from the inverter 14. Detected values of the current detectors 20u, 20v, and 20w are input to the controller 30.

Note that FIG. 1 illustrates a configuration including the three current detectors 20u, 20v, and 20w, but the present disclosure is not limited to this configuration. By using the relationship of iu+iv+iw=0, which is a three-phase equilibrium condition, any one of the three current detectors 20u, 20v, and 20w may be omitted.

The compressor 120 is a load having the motor 110 for compressor driving. The motor 110 rotates in accordance with an amplitude and a phase of the second alternating-current voltage applied from the inverter 14, and performs a compression operation.

The controller 30 includes a control calculator 32 and a driver 34, and controls an operation of the inverter 14 by using a detected value detected by each detector.

The control calculator 32 generates a voltage command for performing pulse width modulation (PWM) control on the inverter 14. The control calculator 32 generates a voltage command for matching a rotational speed of the motor 110 with a rotational speed command, and outputs the voltage command to the driver 34.

The driver 34 generates a drive signal for driving the plurality of switching elements 14a of the inverter 14, by using the voltage command generated by the control calculator 32. The rotational speed of the motor 110 is controlled as the switching element 14a of the inverter 14 is PWM-controlled.

Note that, in the above control, the controller 30 may not use all the detected values acquired from the individual detectors, and may perform control by using some detected values.

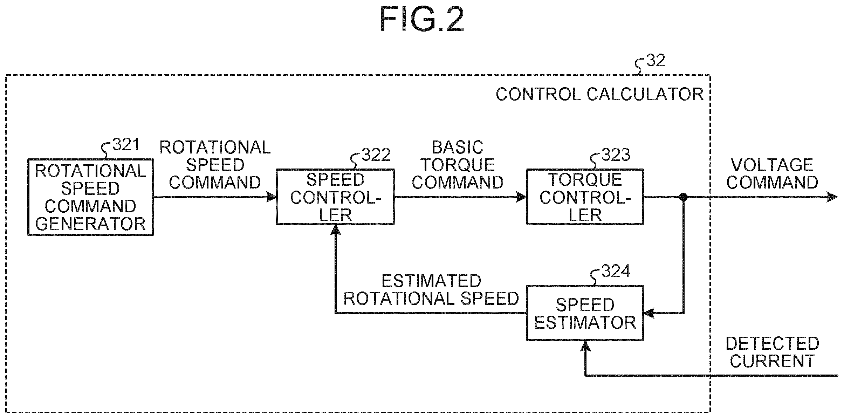

Next, a configuration and an operation of the control calculator 32 that solve the above-described problem will be described. FIG. 2 is a block diagram illustrating a configuration example of the control calculator 32 according to the first embodiment. As illustrated in FIG. 2, the control calculator 32 includes a rotational speed command generator 321, a speed controller 322, a torque controller 323, and a speed estimator 324.

The rotational speed command generator 321 generates a rotational speed command to be given to the motor 110. The rotational speed command generated by the rotational speed command generator 321 is input to the speed controller 322.

The speed controller 322 generates a basic torque command for matching an estimated rotational speed with the rotational speed command, and outputs the basic torque command to the torque controller 323. To the computation of the basic torque command, speed control by a general proportional integral differential (PID) controller or a general proportional integral (PI) controller can be applied. However, a controller other than the PID controller or the PI controller may be used as long as desired control performance can be obtained.

The torque controller 323 generates a voltage command for matching an output torque of the motor 110 with the basic torque command, and outputs the voltage command to the driver 34. In order to control the output torque of the motor 110 to a desired value, it is known that control is preferably performed on a dq-axis current which is a current in a dq-axis coordinate system. However, it is needless to say that control may be performed with a current in a coordinate system other than the dq-axis coordinate system. A general PI controller can be used to control of the dq-axis current. However, a controller other than the PI controller may be used as long as desired control performance can be obtained.

The speed estimator 324 generates an estimated rotational speed on the basis of a voltage command and a detected current. The estimated rotational speed is an estimated value of the rotational speed of the motor 110. For the computation of the estimated rotational speed, a case of using a PI controller and a case of connecting the PI controller and an integrator in series are known. However, a configuration other than these cases may be used as long as desired control performance can be obtained.

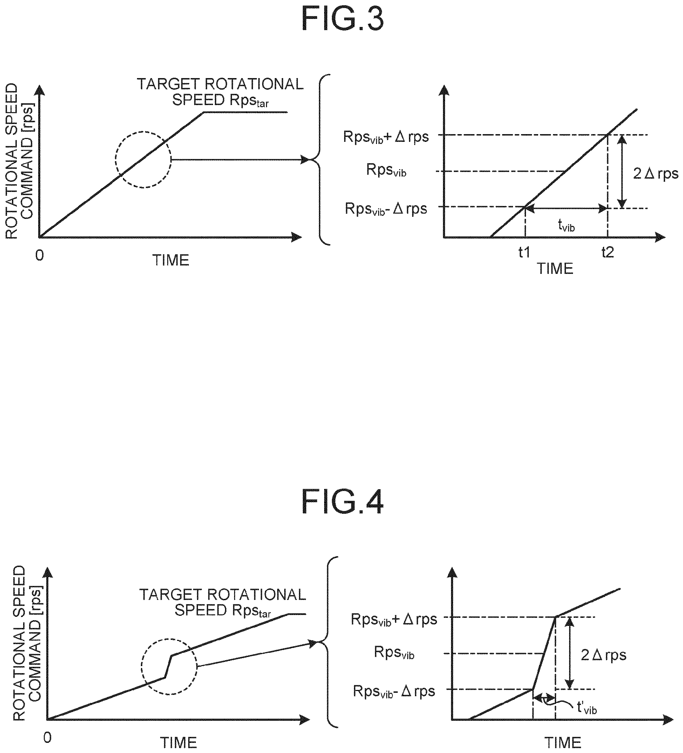

FIG. 3 is a graph illustrating a typical generation pattern of the rotational speed command. Further, FIG. 4 is a graph illustrating an example of a generation pattern of the rotational speed command in the first embodiment.

In FIGS. 3 and 4, a horizontal axis represents time, and a vertical axis represents a rotational speed command. FIGS. 3 and 4 illustrate a time-varying waveform of the rotational speed command when the motor 110 is accelerated to a target rotational speed $Rps_{tar}$. Further, on the right side of FIGS. 3 and 4, an enlarged waveform of a portion indicated by a broken line circle in the graph on the left side is illustrated. Note that, in the following description, the description is made by assuming that an actual rotational speed of the motor 110 substantially matches the rotational speed command.

When the motor 110 is accelerated to the target rotational speed $Rps_{tar}$, typically, the rotational speed command is increased in proportion to the time as illustrated in FIG. 3. In the graph on the right, $Rps_{vib}$ is a rotational speed command when the beat sound described above becomes large. The beat sound is not generated in a pinpoint manner, but is generated in a range of a rotational speed command having a certain width. Therefore, in the control of the first embodiment, a range having a width of $\pm\Delta rps$, that is, a range of $2\Delta rps$ is set before and after $Rps_{vib}$, and this range is defined as a "first speed range". Furthermore, a period corresponding to the first speed range, that is, a period during which the rotational speed of the motor 110 is in the first speed range is defined as a "first period" and represented by $t_{vib}$.

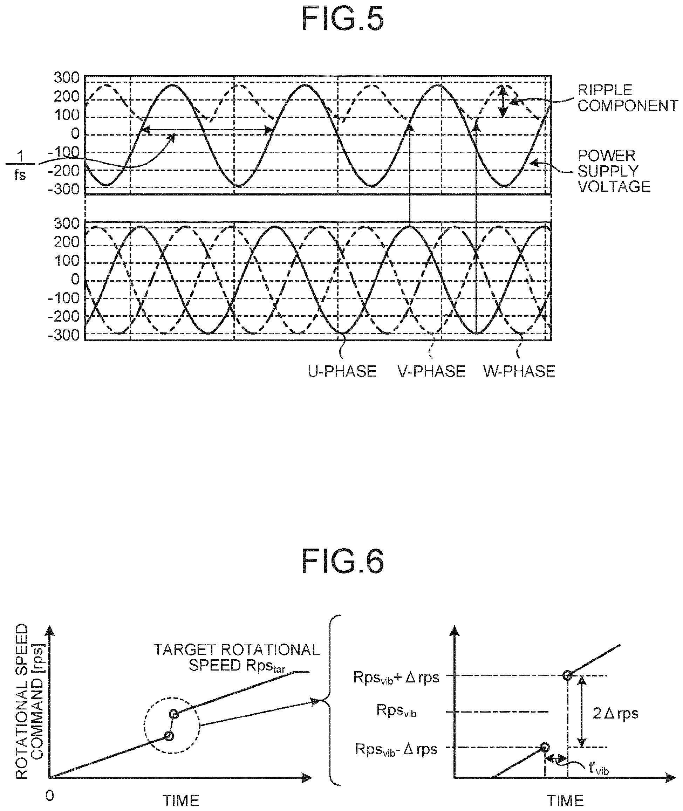

FIG. 5 is a view for explaining a cause of generation of beat sound that may be generated in a configuration of the first embodiment. In FIG. 5, a horizontal axis represents time, and a vertical axis represents an amplitude of each waveform. In the upper part, a power supply voltage is indicated by a solid line, and a rectified voltage is indicated by a broken line. In the lower part, a U-phase voltage command is indicated by a solid line, a V-phase voltage command is indicated by a broken line, and a W-phase voltage command is indicated by a one-dot chain line.

When a power supply frequency, which is a frequency of the power supply voltage, is represented by fs, one cycle of the power supply voltage is represented by 1/fs. At this time, the rectified voltage output from the converter 10 includes a ripple component. In FIG. 5, a cycle of a voltage command of each phase matches a cycle of the power supply voltage. For this reason, the ripple component of the rectified voltage becomes a trough at a position of a peak and a trough of a waveform of the U-phase voltage command, and this state is repeated. As illustrated in FIG. 5, the state has a high possibility of generation of the beat sound.

As illustrated in FIG. 5, when the cycle of the voltage command matches the cycle of the power supply voltage, the beat sound becomes large. Note that, even without complete matching, when the cycle of the voltage command and the cycle of the power supply voltage are close to each other, there is a high possibility of generation of the beat sound. Therefore, in the first embodiment, as illustrated in FIG. 4, an acceleration/deceleration rate of the rotational speed command is changed from a predetermined value, that is, changed from an acceleration/deceleration rate during a normal control, in the first period ($t'_{vib}$) in which the rotational speed of the motor 110 is in the first speed range ($2\Delta rps$). In the first embodiment, the rotational speed command is an example of a command value for a physical quantity associated with a change in the rotational speed.

Comparing the first period $t_{vib}$ illustrated in FIG. 3 with the first period $t'_{vib}$ illustrated in FIG. 4, a relationship of $t'_{vib}<t_{vib}$ is established. Therefore, in the first period $t'_{vib}$ of FIG. 4, an acceleration/deceleration rate which is a time change rate of the rotational speed command is larger than the acceleration/deceleration rate illustrated in FIG. 3. That is, according to the control of the first embodiment, the controller 30 drives the motor 110 at the acceleration/deceleration rate during the normal control until the first period $t'_{vib}$ is reached, during both the acceleration and deceleration. When the first period $t'_{vib}$ is reached, the motor 110 is driven at an acceleration/deceleration rate higher than the acceleration/deceleration rate during the normal control. Then, after the first period $t'_{vib}$, the motor 110 is driven at the acceleration/deceleration rate during the normal control.

The rotational speed command generator 321 generates and outputs an acceleration/deceleration rate "rate" according to the following Equation (1).

$$\mathtt{rate=(Rps_{vib}+\Delta rps)}$$
$$\mathtt{-(Rps_{vib}-\Delta rps)/(t2-t1)}$$
$$\mathtt{=2\Delta rps/t'_{vib}...(1)}$$

In the above Equation (1), a time t1 is a time when the rotational speed command becomes $Rps_{vib}-\Delta rps$, and a time t2 is a time when the rotational speed command becomes $Rps_{vib}+\Delta rps$. Then, the first period $t'_{vib}$ needs to satisfy a relationship expressed by the following Equation (2) for the power supply frequency fs described above.

$$\mathtt{t'_{vib}<1/fs...(2)}$$

In Equations (1) and (2), pulsation of a direct-current voltage is caused by the power supply frequency fs.

Therefore, for example, under the condition that the direct-current voltage vibrates at 50 [Hz], when $\Delta rps$ is 5 [rps], the acceleration/deceleration rate needs to be set to a value exceeding $2\times5\times50=500$ [rps/sec].

Note that, in the above description, the description has been given in which the acceleration/deceleration rate is increased in the first speed range before and after, as a center, a rotational speed that affects the pulsation of the direct-current voltage caused by the power supply frequency fs, but the present disclosure is not limited to this example. When there is another frequency that affects the pulsation of the direct-current voltage, a first speed range corresponding to the frequency may be set, and control may be performed to increase the acceleration/deceleration rate in the first speed range.

In addition, acceleration and deceleration control illustrated in FIG. 6 may be performed instead of the acceleration and deceleration control illustrated in FIG. 4. FIG. 6 is a graph illustrating another example of a generation pattern of the rotational speed command in the first embodiment. In the generation pattern illustrated in FIG. 6, output of the rotational speed command is stopped in the first period $t'_{vib}$. Accordingly, in the first period $t'_{vib}$, the rotational speed command is not given to the motor 110. When a value of $2\Delta rps$, which is the first speed range, is small with respect to the frequency affecting the pulsation of the direct-current voltage, the first period $t'_{vib}$ can be regarded as increasing the acceleration/deceleration rate from a macroscopic viewpoint. Therefore, it is possible to obtain an effect equivalent to that in the case of the control of FIG. 4.

As described above, according to the power converter according to the first embodiment, when the controller performs acceleration and deceleration control on the motor, the controller changes the rotational speed command from the command value during the normal control, in the first period in which the rotational speed of the motor is in the first speed range. As a result, the motor can be smoothly accelerated and decelerated while generation of the beat sound is suppressed.

Note that, in the first period, the acceleration/deceleration rate, which is a change amount per unit time of the rotational speed command, is set to be larger than a reciprocal of a cycle of the alternating-current power supply. By doing in this way, it is possible to suppress generation of the beat sound at the rotational speed that affects the pulsation of the direct-current voltage caused by the power supply frequency.

Further, in the first period, the rotational speed command may be skipped without being applied to the motor. Even in this case, the effect of increasing the acceleration/deceleration rate can be obtained.

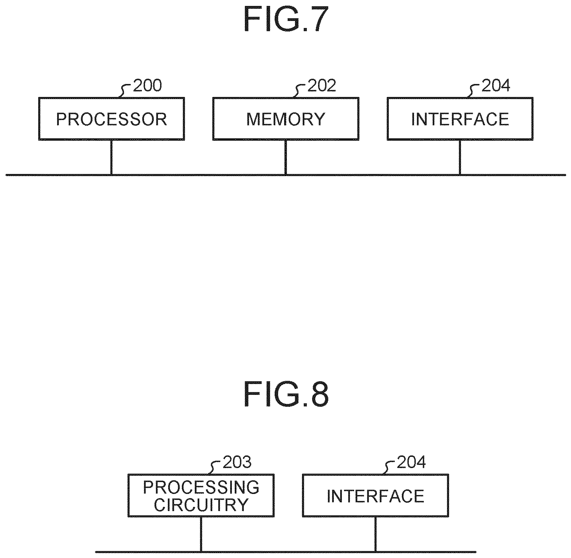

Next, with reference to the drawings of FIGS. 7 and 8, a hardware configuration for implementing functions of the control calculator 32 in the first embodiment will be described. FIG. 7 is a block diagram illustrating an example of a hardware configuration that implements functions of the control calculator 32 in the first embodiment. FIG. 8 is a block diagram illustrating another example of a hardware configuration that implements functions of the control calculator 32 in the first embodiment.

In a case where some or all of the functions of the control calculator 32 in the first embodiment are implemented, as illustrated in FIG. 7, a configuration may be adopted including a processor 200 that performs arithmetic operation, a memory 202 that stores a program to be read by the processor 200, and an interface 204 that inputs and outputs signals.

The processor 200 may be an arithmetic means such as a computing device, a microprocessor, a microcomputer, a central processing unit (CPU), or a digital signal processor (DSP). Further, examples of the memory 202 can include a nonvolatile or volatile semiconductor memory such as a random access memory (RAM), a read only memory (ROM), a flash memory, an erasable programmable ROM (EPROM), or an electrically EPROM (EEPROM, registered trademark), a magnetic disk, a flexible disk, an optical disk, a compact disk, a mini disk, and a digital versatile disc (DVD).

The memory 202 stores a program for executing the functions of the control calculator 32 in the first embodiment. The processor 200 can perform the above-described processing by exchanging necessary information via the interface 204, causing the processor 200 to execute a program stored in the memory 202, and causing the processor 200 to refer to a table stored in the memory 202. A computation result by the processor 200 can be stored in the memory 202.

In addition, in a case where some of the functions of the control calculator 32 in the first embodiment are implemented, processing circuitry 203 illustrated in FIG. 8 can also be used. The processing circuitry 203 corresponds to a single circuit, a composite circuit, an application specific integrated circuit (ASIC), a field-programmable gate array (FPGA), or a combination of these. Information input to the processing circuitry 203 and information output from the processing circuitry 203 can be obtained via the interface 204.

Note that some of the processing in the control calculator 32 may be performed by the processing circuitry 203, and processing that is not performed by the processing circuitry 203 may be performed by the processor 200 and the memory 202.

Second Embodiment.

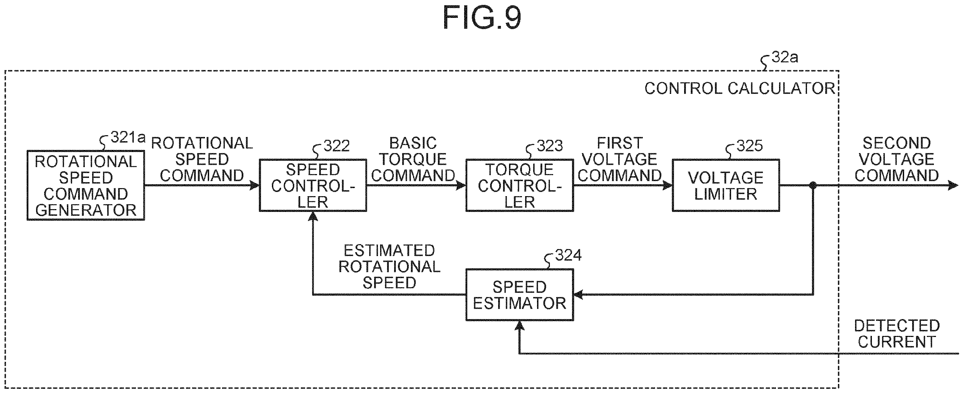

FIG. 9 is a block diagram illustrating a configuration example of a control calculator 32a according to a second embodiment. In the control calculator 32a according to the second embodiment, as compared with the configuration illustrated in FIG. 2, a voltage limiter 325 is added, and the rotational speed command generator 321 is replaced with a rotational speed command generator 321a. Other configurations are identical or equivalent to those in FIG. 2, and identical or equivalent components are denoted by identical reference numerals, and redundant descriptions are omitted.

While the rotational speed command generator 321 according to the first embodiment is a component that generates a rotational speed command having a pattern illustrated in FIG. 4, the rotational speed command generator 321a according to the second embodiment is a component that generates a rotational speed command having a pattern illustrated in FIG. 3. That is, the function described in the first embodiment is not added to the rotational speed command generator 321a according to the second embodiment.

The torque controller 323 generates a first voltage command for matching an output torque of the motor 110 with a basic torque command, and outputs the first voltage command to the voltage limiter 325. When the voltage limiter 325 performs acceleration and deceleration control on the motor 110, the voltage limiter 325 generates a second voltage command with a limited magnitude of the first voltage command and outputs the second voltage command to the driver 34, in a first period in which the rotational speed of the motor 110 is in a first speed range. In the second embodiment, the second voltage command is an example of a command value for a physical quantity associated with a change in the rotational speed.

The driver 34 drives the inverter 14 by using the second voltage command generated by the voltage limiter 325. That is, the rotational speed of the motor 110 is controlled on the basis of the second voltage command.

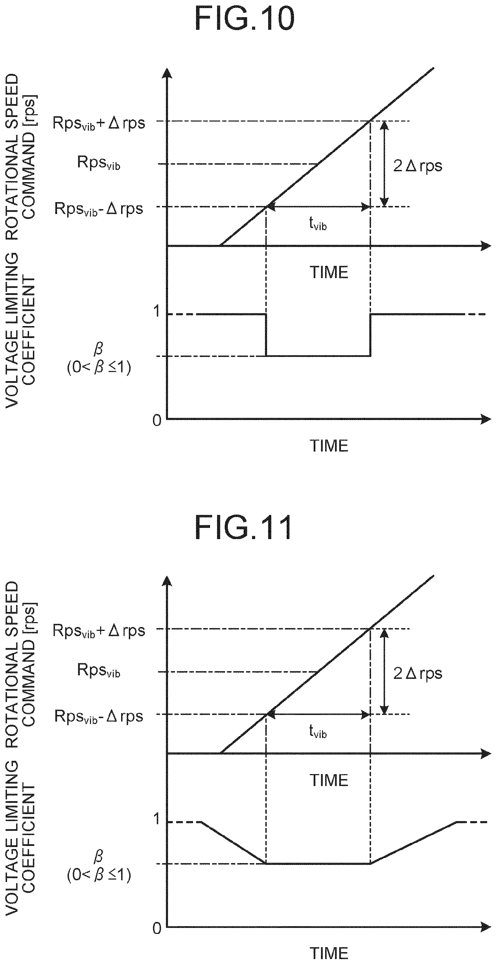

FIG. 10 is a graph illustrating an example of a generation pattern of a rotational speed command and a voltage limiting coefficient in the second embodiment. A horizontal axis in FIG. 10 represents time. In addition, a vertical axis of the graph on the upper side of FIG. 10 indicates a rotational speed command, and a vertical axis of the graph on the lower side indicates a voltage limiting coefficient. Note that the graph on the upper side is identical to the graph illustrated on the right side of FIG. 3.

The voltage limiter 325 computes a voltage limiting coefficient $\beta$ which is for limiting magnitude of the first voltage command. The voltage limiting coefficient $\beta$ is a real number larger than 0 and equal to or smaller than 1. The voltage limiter 325 multiplies the first voltage command by the voltage limiting coefficient $\beta$ in the first period $t_{vib}$ in which the rotational speed of the motor 110 is in the first speed range, and outputs the multiplication result as the second voltage command.

By using the second voltage command multiplied by the voltage limiting coefficient $\beta$, a motor application voltage is limited in the first period $t_{vib}$. As a result, since a peak value of a motor current decreases as compared with a case where the motor application voltage is not limited, it is possible to reduce the beat sound.

Note that, since the motor application voltage decreases as the voltage limiting coefficient $\beta$ decreases, the effect of reducing the beat sound also increases. However, when the motor application voltage is excessively lowered, a necessary motor torque cannot be obtained, and there is a possibility that a defect such as step-out of the motor 110 occurs. Therefore, it is desirable to acquire the voltage limiting coefficient $\beta$ in advance by measurement or analysis in a design stage. Alternatively, instead of this method, a provisionally set voltage limiting coefficient $\beta$ may be updated in an actual environment. For example, in an actual operation, the voltage limiting coefficient $\beta$ is gradually decreased, and the voltage limiting coefficient $\beta'$ when a defect such as step-out occurs is stored. Then, a method is conceivable in which the voltage limiting coefficient $\beta$ used in the actual operation is set within a range not equal to or less than the stored voltage limiting coefficient β'.

Note that, in FIG. 10, the example in which the voltage limiting coefficient β is applied only in the first period $t_{vib}$ has been described. However, when the voltage limiting coefficient β suddenly decreases from 1, a change rate of the voltage narrowed during the control on the motor 110 increases. Such a sudden change in the motor application voltage may cause a problem in the control on the motor 110. Therefore, control may be performed as illustrated in FIG. 11. FIG. 11 is a graph illustrating another example of a generation pattern of the rotational speed command and the voltage limiting coefficient in the second embodiment. The graph on the upper side of FIG. 11 is identical to the graph illustrated in the upper side of FIG. 10.

According to the example of FIG. 11, before and after the first period $t_{vib}$, a value of the voltage limiting coefficient β is gradually changed from the normal "1". By doing in this way, it is possible to perform voltage limitation seamlessly without giving a shock to the control on the rotation of the motor 110.

Note that the examples illustrated in FIGS. 10 and 11 are examples, and the present disclosure is not limited to these examples. Any control method may be used as long as the voltage applied to the motor 110 is limited in accordance with the rotational speed, and the control target is also not limited.

Further, in the second embodiment, the rotational speed command generator 321a that generates the rotational speed command having the pattern illustrated in FIG. 3 is used, but the control may be performed using the rotational speed command generator 321 applied in the first embodiment. When the rotational speed command generator 321a according to the second embodiment is configured using the rotational speed command generator 321 according to the first embodiment, the effects of the first embodiment can also be obtained in addition to the effects of the second embodiment.

As described above, according to the power converter according to the second embodiment, when the controller performs acceleration and deceleration control on the motor, the controller changes the second voltage command from the command value during the normal control, in the first period in which the rotational speed of the motor is in the first speed range. Specifically, the second voltage command is made smaller than the voltage command during the normal control. As a result, since a peak value of a motor current decreases as compared with a case where the motor application voltage is not limited, the beat sound is reduced. As a result, the motor can be smoothly accelerated and decelerated while generation of the beat sound is suppressed.

Note that the second voltage command may be continuously changed before and after the first period. By doing in this way, the voltage can be seamlessly limited without giving a shock to the control on the rotation of the motor.

Third Embodiment.

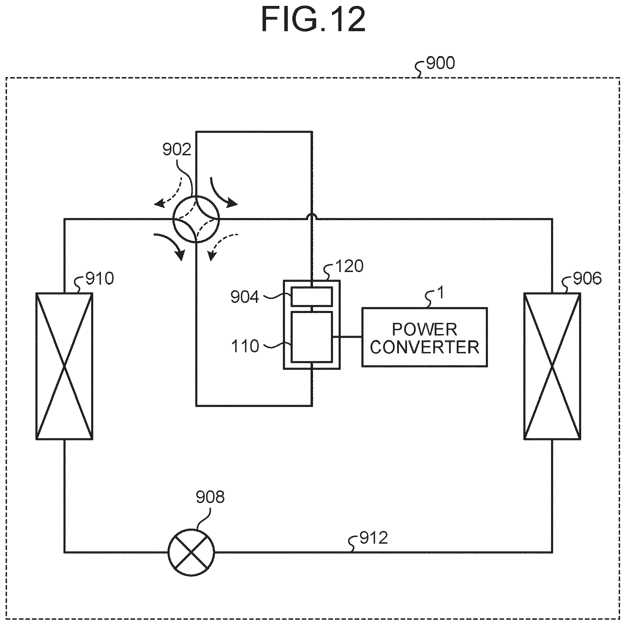

FIG. 12 is a diagram illustrating a configuration example of a refrigeration cycle applied equipment 900 according to a third embodiment. The refrigeration cycle applied equipment 900 according to the third embodiment includes the power converter 1 described in the first embodiment. The refrigeration cycle applied equipment 900 according to the third embodiment can be applied to a product including a refrigeration cycle, such as an air conditioner, a refrigerator, a freezer, or a heat pump water heater. Note that, in FIG. 12, components having functions similar to those of the first embodiment are denoted by reference numerals identical to those of the first embodiment.

The refrigeration cycle applied equipment 900 includes the compressor 120 incorporating the motor 110 according to the first embodiment, a four-way valve 902, an indoor heat exchanger 906, an expansion valve 908, and an outdoor heat exchanger 910, which are attached via a refrigerant pipe 912.

Inside the compressor 120, a compression mechanism 904 that compresses a refrigerant and the motor 110 that operates the compression mechanism 904 are provided.

The refrigeration cycle applied equipment 900 can perform heating operation or cooling operation by a switching operation of the four-way valve 902. The compression mechanism 904 is driven by the motor 110 that is variable-speed controlled.

During the heating operation, as indicated by solid arrows, the refrigerant is pressurized and fed by the compression mechanism 904, and returns to the compression mechanism 904 through the four-way valve 902, the indoor heat exchanger 906, the expansion valve 908, the outdoor heat exchanger 910, and the four-way valve 902.

During the cooling operation, as indicated by broken arrows, the refrigerant is pressurized and fed by the compression mechanism 904, and returns to the compression mechanism 904 through the four-way valve 902, the outdoor heat exchanger 910, the expansion valve 908, the indoor heat exchanger 906, and the four-way valve 902.

During the heating operation, the indoor heat exchanger 906 acts as a condenser to release heat, and the outdoor heat exchanger 910 acts as an evaporator to absorb heat. During the cooling operation, the outdoor heat exchanger 910 acts as a condenser to release heat, and the indoor heat exchanger 906 acts as an evaporator to absorb heat. The expansion valve 908 decompresses and expands the refrigerant.

The configuration illustrated in the above embodiments illustrates one example and can be combined with another known technique, and it is also possible to combine embodiments with each other and omit and change a part of the configuration without departing from the subject matter of the present invention.

Reference Signs List

1 power converter; 2 motor driver; 10 converter; 10a rectifying element; 12 capacitor; 14 inverter; 14a switching element; 16 voltage-current detector; 18 voltage detector; 20u, 20v, 20w current detector; 30 controller; 32, 32a control calculator; 34 driver; 100 alternating-current power supply; 110 motor; 120 compressor; 200 processor; 202 memory; 203 processing circuitry; 204 interface; 321, 321a rotational speed command generator; 322 speed controller; 323 torque controller; 324 speed estimator; 325 voltage limiter; 900 refrigeration cycle applied equipment; 902 four-way valve; 904 compression mechanism; 906 indoor heat exchanger; 908 expansion valve; 910 outdoor heat exchanger; 912

refrigerant pipe.

**Claims**

1.   A power converter comprising:

   a converter adapted to rectify an alternating-current voltage applied from an alternating-current power supply;
   a capacitor connected to output ends of the converter;
   an inverter connected to both ends of the capacitor; and
   a controller adapted to control an operation of the inverter, wherein
   a voltage output from the converter includes a ripple component due to a voltage fluctuation of the alternating-current voltage, and
   when the controller performs acceleration and deceleration control on a motor, the controller is adapted to change a command value for a physical quantity associated with a change in a rotational speed of the motor from a command value for the physical quantity during a normal control, in a first period in which the rotational speed is in a first speed range.

2.   The power converter according to claim 1, wherein

   the command value is a rotational speed command to be given to the motor, and
   in the first period, an acceleration/deceleration rate is larger than a reciprocal of a cycle of the alternating-current power supply, the acceleration/deceleration rate being a change amount per unit time of the rotational speed command.

3.   The power converter according to claim 2, wherein the rotational speed command is not given to the motor in the first period.

4.   The power converter according to any one of claims 1 to 3, wherein

   the command value is a voltage command to be applied to the inverter, and
   in the first period, the voltage command is smaller than a voltage command during the normal control.

5.   The power converter according to claim 4, wherein the voltage command is adapted to change continuously before and after the first period.

6.   A motor driver comprising the power converter according to any one of claims 1 to 5.

7.   A refrigeration cycle applied equipment comprising the power converter according to any one of claims 1 to 5.

# FIG.1

# FIG.2

# FIG.3

# FIG.4

# FIG.5

RIPPLE
COMPONENT

POWER
SUPPLY
VOLTAGE

$\dfrac{1}{fs}$

U-PHASE    V-PHASE    W-PHASE

# FIG.6

TARGET ROTATIONAL
SPEED Rps$_{tar}$

ROTATIONAL SPEED
COMMAND [rps]

0        TIME

Rps$_{vib}$+$\Delta$rps

Rps$_{vib}$

Rps$_{vib}$-$\Delta$rps

2$\Delta$rps

t'$_{vib}$

TIME

# FIG.7

| PROCESSOR | MEMORY | INTERFACE |
|-----------|--------|-----------|

200 202 204

# FIG.8

| PROCESSING CIRCUITRY | INTERFACE |
|----------------------|-----------|

203 204

# FIG.9

CONTROL CALCULATOR 32a

ROTATIONAL SPEED COMMAND GENERATOR 321a → ROTATIONAL SPEED COMMAND → SPEED CONTROLLER 322 → BASIC TORQUE COMMAND → TORQUE CONTROLLER 323 → FIRST VOLTAGE COMMAND → VOLTAGE LIMITER 325 → SECOND VOLTAGE COMMAND

ESTIMATED ROTATIONAL SPEED ← SPEED ESTIMATOR 324

DETECTED CURRENT

EP 4 277 108 A1

# FIG.10

# FIG.11

# FIG.12

## INTERNATIONAL SEARCH REPORT

International application No.

PCT/JP2021/000195

### A. CLASSIFICATION OF SUBJECT MATTER
Int.Cl. H02M7/48(2007.01)i
FI: H02M7/48F, H02M7/48L

According to International Patent Classification (IPC) or to both national classification and IPC

### B. FIELDS SEARCHED

Minimum documentation searched (classification system followed by classification symbols)
Int.Cl. H02M7/48

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-184427 A (ROHM CO., LTD.) 05 October 2017 (2017-10-05), entire text, all drawings | 1–7 |
| A | JP 5-68305 A (TOSHIBA TRANSPORT ENG INC.) 19 March 1993 (1993-03-19), entire text, all drawings | 1–7 |
| A | JP 59-132793 A (MEIDENSHA CORPORATION) 30 July 1984 (1984-07-30), entire text, all drawings | 1–7 |
| A | JP 7-222478 A (MITSUBISHI ELECTRIC CORPORATION) 18 August 1995 (1995-08-18), entire text, all drawings | 1–7 |
| A | JP 8-35711 A (HITACHI, LTD.) 06 February 1996 (1996-02-06), entire text, all drawings | 1–7 |

☐ Further documents are listed in the continuation of Box C. ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 March 2021 | 06 April 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/000195 |

| | | |
| --- | --- | --- |
| JP 2017-184427 A | 05 October 2017 | (Family: none) |
| JP 5-68305 A | 19 March 1993 | (Family: none) |
| JP 59-132793 A | 30 July 1984 | (Family: none) |
| JP 7-222478 A | 18 August 1995 | US 5744927 A<br>GB 2286734 A<br>DE 19501375 A1<br>CN 1115518 A |
| JP 8-35711 A | 06 February 1996 | (Family: none) |

Form PCT/ISA/210 (patent family annex) (January 2015)

**EP 4 277 108 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007104756 A